# EUROPÄISCHE PATENTANMELDUNG

(11) **EP 1 043 272 A1**
(43) Veröffentlichungstag der Anmeldung: **11.10.2000**
(21) Anmeldenummer: 00104400.7
(22) Anmeldetag: 02.03.2000
(51) Int. Cl.: C01B 15/01

(54) **Online-Verdünnungsanlage zum Verdünnen von Wasserstoffperoxidlösungen**

(30) Priorität: 19.03.1999 DE 29905030 U
(71) Anmelder: Degussa-Hüls Aktiengesellschaft, 60287 Frankfurt am Main (DE)
(72) Erfinder: König, Bernhard, 63594 Hasselroth (DE)

(57) **Zusammenfassung**

Die Erfindung betrifft eine online-Verdünnungsanlage zur Herstellung von niedrig konzentrierten Wasserstoffperoxidlösungen aus höher konzentrierten Wasserstoffperoxidlösungen. Sie umfasst je eine Leitung für höher konzentriertes Wasserstoffperoxid (1) und Verdünnungswasser (2), welche jeweils nach einem Anschlußstutzen (3, 4) hintereinander eine Förderpumpe (5, 6), ein Massendurchflußmeßgerät (7, 8) und ein Rückschlagventil (9, 10) aufweisen und in einen statischen Mischer (11) münden, eine Auslaßleitung (12) aus dem statischen Mischer sowie einen Rechner (15) zur Signalverarbeitung der Durchflußmeßgeräte und Steuerung der Förderpumpen.

## Beschreibung

Gegenstand der vorliegenden Erfindung ist eine Online-Verdünnungsanlage zur Herstellung von niedrig konzentrierten Wasserstoffperoxidlösungen aus höher konzentrierten Wasserstoffperoxidlösungen und Verdünnungswasser. Die Anlage gestattet es, Lösungen beliebiger niedrigerer Konzentration kontinuierlich zu erzeugen.

Handelsübliche Wasserstoffperoxidlösungen, es handelt sich in der Regel um wäßrige Lösungen, weisen in der Regel eine H₂O₂-Konzentration im Bereich von etwa 27 bis 87 Gew.-% auf. Im Hinblick auf die Transportkosten und Sicherheitsaspekte werden Lösungen mit einem Gehalt von 50 bis 70 Gew.-% bevorzugt. Andererseits sind die Verwender von Wasserstoffperoxidlösungen vielfach darauf angewiesen, Wasserstoffperoxid in niedrigerer Konzentration einzusetzen, als es geliefert wurde. Die erforderlichen Verdünnungen erfolgten im großtechnischen Maßstab in aufwendigen Mischtanks. Hinzu kommt, daß das Verdünnen mehrere Arbeitsschritte erforderlich macht und die Dauer je nach der Menge des Mischvolumens mehrere Stunden beträgt.

Aufgabe der Erfindung ist es, eine einfache Anlage zur Verfügung zu stellen, womit die Endverbraucher ohne großen technischen Aufwand die für den Anwendungszweck geeignete niedrigere Konzentration gewinnen können. Gemäß einer weiteren Aufgabe der Erfindung sollte die Anlage auch geeignet sein, in einem Tank- oder Kesselwagen angeliefertes hochprozentiges Wasserstoffperoxid bereits beim Entleeren auf die gewünschte Verwendungskonzentration zu verdünnen, um das verdünnte Wasserstoffperoxid am Verbrauchsort in verdünnter Form zu lagern oder unmittelbar zu verwenden.

Gefunden wurde eine Online-Verdünnungsanlage zur Herstellung von niedrig konzentrierten Wasserstoffperoxidlösungen aus höher konzentrierten Wasserstoffperoxidlösungen, umfassend je eine Leitung für höher konzentriertes Wasserstoffperoxid (1) und Verdünnungswasser (2), welche jeweils nach einem Anschlußstutzen (3, 4) hintereinander eine Förderpumpe (5, 6), ein Massendurchflußmeßgerät (7, 8) und ein Rückschlagventil (9, 10) aufweisen und in einen statischen Mischer (11) münden, eine Auslaßleitung (12) aus dem statischen Mischer für die erzeugte niedrig konzentrierte Wasserstoffperoxidlösung mit einem Ventil (13) und/oder Anschlußstutzen (14) sowie einen Rechner (15) zur Signalverarbeitung der Durchflußmeßgeräte und Steuerung der Förderpumpen. Die weiteren Patentansprüche richten sich auf bevorzugte Ausführungsformen der Verdünnungsanlage.

Die Figur zeigt eine Schemazeichnung einer bevorzugten Ausführungsform der Verdünnungsanlage. Wesentlich ist hierbei, daß das höher konzentrierte Wasserstoffperoxid (Konzentration c₁) und das Verdünnungswasser im gewünschten Massenverhältnis einem statischen Mischer zugeführt werden, und niedriger konzentriertes Wasserstoffperoxid (Konzentration c₂) aus diesem statischen Mischer abgenommen werden kann. In der Figur sind die Signal- und Steuerleitungen zwischen dem Rechner (15) und den Massendurchflußmeßgeräten (7 und 8) sowie den Förderpumpen (5 und 6) nicht eingezeichnet.

Gemäß einer bevorzugten Ausführungsform befinden sich zwischen der jeweiligen Förderpumpe und dem dazugehörigen Massendurchflußmeßgerät eine Vorrichtung zur Druck- und/oder Temperaturmessung (18 und 19). Die Ventile in den Leitungen 1 und 2 (16, 20 und 17, 21) sind für eine störungsfreie und problemlose Handhabung zweckmäßig. Aus Sicherheitsgründen ist es zweckmäßig, im by-pass zur Leitung für das höher konzentrierte Wasserstoffperoxid zwischen der Förderpumpe und dem statischen Mischer eine by-pass-Leitung (22) mit einem Sicherheitsventil (23) anzuordnen. Vorzugsweise werden selbstansaugende Förderpumpen in der Vorrichtung eingesetzt. Bei dem statischen Mischer handelt es sich um einen solchen üblicher Bauart, wobei das Material desselben in gleicher Weise wie die übrigen H₂O₂-berührten Teile der Anlage aus einem Material gefertigt sein müssen, welche die Stabilität von Wasserstoffperoxid nicht nachteilig beeinflussen.

Durch Messen des Massendurchflußes gehen Fehler durch Temperaturschwankungen nicht in das Mischergebnis ein. Es ist somit möglich, verdünnte Lösungen mit einer Genauigkeit von über ± 0,1 % herzustellen.

Die Verdünnungsanlage läßt sich sowohl stationär im Bereich des Orts der Verwendung oder des Lagerbehälters aufbauen, als auch in Form einer transportablen Anlage verwenden. Vorteile der neuerungsgemäßen Anlage sind die kompakte Bauart, die leichte Handhabbarkeit derselben und die Genauigkeit, mit welcher die gewünschte Verdünnung eingestellt werden kann. Nach Eingabe der vorgewählten Parameter am Rechner arbeitet die Anlage die Verdünnungssequenz automatisch ab.

## Patentansprüche

1. Online-Verdünnungsanlage zur Herstellung von niedrig konzentrierten Wasserstoffperoxidlösungen aus höher konzentrierten Wasserstoffperoxidlösungen, umfassend je eine Leitung für höher konzentriertes Wasserstoffperoxid (1) und Verdünnungswasser (2), welche jeweils nach einem Anschlußstutzen (3, 4) hintereinander eine Förderpumpe (5, 6), ein Massendurchflußmeßgerät (7, 8) und ein Rückschlagventil (9, 10) aufweisen und in einen statischen Mischer (11) münden, eine Auslaßleitung (12) aus dem statischen Mischer für die erzeugte niedrig konzentrierte Wasserstoffperoxidlösung mit einem Ventil (13) und/oder Anschlußstutzen (14) sowie einen Rechner (15) zur Signalverarbeitung der Durchflußmeßgeräte und Steuerung der Förderpumpen.

2. Verdünnungsanlage nach Anspruch 1,
dadurch gekennzeichnet,
daß zwischen der jeweiligen Förderpumpe und Durchflußmeßgerät ein Ventil (16, 17) und Vorrichtungen zur Druck- (18, 19) und/oder Temperaturmessung angeordnet sind.

3. Verdünnungsanlage nach Anspruch 1 oder 2,
dadurch gekennzeichnet,
daß die Förderpumpen selbstansaugend sind und im by-pass der Leitung für höher konzentriertes Wasserstoffperoxid zwischen der Förderpumpe und dem statischen Mischer eine by-pass-Leitung (22) mit einem Sicherheitsventil (23) angeordnet ist.

4. Verdünnungsanlage nach einem der Ansprüche 1 bis 3,
dadurch gekennzeichnet,
daß die Anlage in einer transportablen rahmen- oder gehäuseförmigen Konstruktion angeordnet ist.
